# EUROPEAN PATENT APPLICATION

(11) **EP 2 568 630 A2**
(43) Date of publication of application: **13.03.2013**
(21) Application number: 12183427.9
(22) Date of filing: 07.09.2012
(51) Int. Cl.: H04H 60/04

(54) **Sound signal processing apparatus**

(30) Priority: 09.09.2011 JP 2011197014
(71) Applicant: YAMAHA CORPORATION, Hamamatsu-shi Shizuoka 430-8650 (JP)
(72) Inventor: Terada, Kotaro, Hamamatsu-shi, Shizuoka 430-8650 (JP)
(74) Representative: Ettmayr, Andreas

(57) **Abstract**

On a sound signal processing apparatus for performing signal processing on a plurality of channels in accordance with parameter values stored in a parameter memory, in a case where a layer selection key "ui" has been operated, channels which satisfy criteria previously designated by a user for the i-th user layer are extracted (S15), so that a channel strip portion to which the extracted channels are assigned in order to accept users operation for changing parameters is provided.

## Description

### BACKGROUND OF THE INVENTION

### Field of the Invention

The present invention relates to a sound signal processing apparatus for performing signal processing at a plurality of channels in accordance with parameter values stored in a parameter memory.

### Description of the Related Art

Conventionally, there is a digital mixer which serves as a sound signal processing apparatus for performing signal processing at a plurality of channels in accordance with parameter values stored in a parameter memory (see Instruction Manual for PM5D/PM5D-RHV2 DSP5D, Yamaha Corporation, 2004, 45-46, 146-147).

This digital mixer has a plurality of channel strips each of which serves as an operating portion having operating elements for accepting user's instructions to set parameters for a channel, whereas the channel strips are assigned desired channels, respectively, so that a user of the digital mixer can edit parameter values of a desired assigned channel by use of the channel strip to which the channel is assigned. In addition, the digital mixer allows the user to register a plurality of layers in each of which the user assigns desired channels to the channel strips, respectively. By selecting one of the layers, therefore, the user is able to assign channels to the channel strips as designated by the selected layer.

Even in a case where the number of channels which the user desires to assign to the channel strips is larger than the number of channel strips, therefore, the user is able to edit parameters of the channels by selecting a desired layer to switch the channels which are to be assigned to the channel strips with user's simple operation.

Furthermore, the above-described digital mixer provides not only previously maker-defined assignment of channels to the channel strips but also a "custom layer" function by which a user can select and assign channels to individual channel strips.

In addition, Japanese Patent Publication No. 3918676 discloses a digital mixer which allows a user to select individual channels to define assignment of the channels as a layer.

In addition to the above-described conventional apparatuses, there is also a known DAW application which is an application operating on an OS (operating system) of a PC (personal computer) and enables the PC to operate as a DAW (digital audio workstation) which records, reproduces and edits sound signals. Representative examples of the DAW application are Cubase (trademark), Nuendo (trademark) of Steinberg ("Cubase 5 Operation Manual" January 7, 2009, [online], particularly 114-115, Steinberg Media Technologies GmbH, Internet <URL:ftp://ftp.steinberg.net./Download/Cubase_5/5.0.0.82/docs_english.zip >, searched on August 15, 2011).

Furthermore, the DAW application allows a user to create as many objects indicative of audio tracks for recording/reproducing sound signals, audio input buses for receiving sound signals, audio output buses for outputting sound signals, MIDI tracks for recording/reproducing MIDI (Musical Instrument Digital Interface) signals, and the like as the user desires. For each of the objects, a processing channel for adjusting characteristics of sound signals or MIDI signals of the object is provided.

On the DAW application, although channel strips of all the channels are provided on an operating screen (mixer window), the user can set "Hide" on channel strips of channels which the user does not wish to display so that the channel strips will not be displayed on the screen. On each of the displayed channel strips, images of operating elements such as rotary knobs, buttons and faders are provided so that the user can manipulate the image of a user's desired operating element with a pointing device (mouse or the like) to change a value of a parameter assigned to the operating element of the channel assigned to the channel strip. In addition, this DAW application is able to store a plurality of view sets each storing respective settings of whether "Hide" is enabled or disabled for the respective channel strips which are to be displayed on one operating screen, so that the user can select any one of the view sets to recall the view set at user's desired point in time.

### SUMMARY OF THE INVENTION

However, the above-described digital mixers are disadvantageous in that the user is required to perform a burdensome task of assigning desired channels to the channel strips of a custom layer, for the user has to define assignment of channels to the channel strips individually. Particularly, in a case where the number of channels which the digital mixer has is quite large, or in a case where a plurality of apparatuses including externally connected apparatuses are to be controlled by use of a control apparatus, it is difficult for the user to grasp the usage of all the channels to determine the assignment of channels to channel strips appropriately.

Furthermore, the above-described DAW application enables the user to create as many MIDI tracks (including MIDI channels), audio tracks (including track channels), audio input buses (including input channels), audio output buses (including output channels) and software tone generating tracks (including musical instrument channels) as the user desires. Therefore, the number of channels which the DAW application provides tends to be enormous, causing a problem that the user is required to perform a burdensome task which requires the user to make the setting so that channel strips of user's desired channels included in the enormous number of channels will be displayed on a mixer window of the DAW application. The concrete operation of the task includes disabling "Hide" on each of the channel strips which are included in channel strips of all the channels that the DAW provides and which the user desires to display on the mixer window of the DAW application, and enabling "Hide" on each of the channel strips which the user does not wish to display.

The above-described problems can commonly arise not only on digital mixers and DAW applications but also on any sound signal processing apparatuses having a user interface which is similar to an operating panel of a mixer and which allows a user to selectively dispose channel strips being assigned user's desired channels included in a plurality of channels.

The present invention was accomplished to solve the above-described problems, and an object thereof is to enable a user to easily obtain a user interface on which channel strips of user's desired channels are provided. As for descriptions for respective constituents of the present invention described below, numbers corresponding to components of a later-described embodiment are given in parenthesis for easy understanding. However, the respective constituents of the present invention are not limited to the corresponding components indicated by the numbers of the embodiment.

In order to achieve the above-described object, it is a feature of the present invention to provide a sound signal processing apparatus including a plurality of channels (40, 81, 82) each having a signal processing portion (41 to 47, 51 to 53) adapted for performing signal processing on an input sound signal; a parameter memory (13, 20) adapted for storing parameters each of which indicates content of processing performed by the signal processing portion provided for each of the channels and is provided for each channel in a manner in which the parameters are correlated with the plurality of channels, respectively; a search criterion setting portion (230, 241, 242, 12) adapted for setting a search criterion for searching for one or more channels of the plurality of channels; channel extracting means (S15, S24) adapted for extracting the one or more channels from the plurality of channels in accordance with the search criterion; and a parameter setting portion (110, 120, 102, 4, S14, S16 to S18, S23, S25) adapted for setting the parameters of the extracted one or more channels.

In the sound signal processing apparatus, the parameter setting portion may be formed of a previously provided plurality of channel strips (110, 120, 102, 4) adapted for setting the parameters indicative of contents of signal processing performed by the respective signal processing portions provided for the plurality of channels; and channel assigning means (S14, S16 to S18) adapted for assigning the extracted one or more channels to the plurality of channel strips, respectively. In this case, the plurality of channel strips are a physical input device (120, 4) or an image of channel strips displayed on a touchscreen (102), for example. Furthermore, the channel assigning means may assign the extracted one or more channels to the plurality of channel strips in sequence. Furthermore, the channel assigning means may have re-assigning means (S14, S17, S18) adapted for assigning, in response to an instruction for re-assigning channels, in sequence to the plurality of channel strips, in a case where the number of extracted channels is larger than the number of channel strips, one or more channels which are included in the extracted channels but have not been assigned to the channel strips yet.

Furthermore, the sound signal processing apparatus may further include a channel configuration data memory (12) adapted for storing, in response to user's operation for storage, channel configuration data indicative of a configuration of one or more channels assigned to the channel strips by the channel assigning means; wherein in response to user's operation for reading the channel configuration data, parameters of the one or more channels indicated by the channel configuration data may be set on the plurality of channel strips. In this case, the user's operation for storing the channel configuration data is done by use of a physical operating element (17) or an operating portion (221) displayed on a touchscreen (102). The user's operation for reading the channel configuration data is also done by use of the physical operating element (17) or the operating portion (210) displayed on the touchscreen (102).

Furthermore, the sound signal processing apparatus may further include a channel modifying portion (223, 250) adapted for modifying the channel configuration indicated by the configuration data stored in the channel configuration data memory. Furthermore, the channel configuration data memory may store selectable sets of channel configuration data. In this case, the user's selection from among the sets of channel configuration data is done by use of a plurality of physical operating elements (160) or the operating portion (210) displayed on the touchscreen (102).

Instead of the parameter setting portion, furthermore, the parameter setting portion of the sound signal processing apparatus may have channel strip creating means (S23, S25) adapted for displaying, on a display, one or more channel strips which correspond to the extracted one or more channels, respectively, and are provided for setting parameters indicative of contents of signal processing performed by the signal processing portions provided for the plurality of channels, respectively; and the parameter setting portion may set the parameters of the extracted one or more channels in accordance with user's operation on the displayed one or more channel strips made by use of a pointing device. In this case, the channel strip creating means may control whether or not each of the one or more channel strips corresponding to the extracted one or more channels is to be displayed on the display, by enabling or disabling data (Hide) which is provided for each of the plurality of channel strips and indicates whether the corresponding channel strip is to be displayed on the display.

Furthermore, the sound signal processing apparatus may further include a channel configuration data memory (12) adapted for storing, in response to user's operation for storage, channel configuration data indicative of a configuration of one or more channels corresponding to the one or more channel strips created by the channel strip creating means; wherein in response to user's operation for reading the channel configuration data stored in the channel configuration data memory, the one or more channel strips corresponding to the one or more channels indicated by the channel configuration data are displayed on the display. In this case, the user's operation for storing the channel configuration data is done by use of the displayed operating portion (221). The user's operation for reading the channel configuration data is also done by use of the displayed operating portion (221).

Furthermore, the sound signal processing apparatus may further include a channel modifying portion (223, 250) adapted for modifying the channel configuration indicated by the configuration data stored in the channel configuration data memory. Furthermore, the channel configuration data memory may store selectable sets of channel configuration data. In this case, the user's selection from among the sets of channel configuration data is done by use of the displayed operating portion (210). In this case, the channel configuration data may be data indicative of whether or not the channel strips are to be displayed on the display.

Furthermore, the search criterion setting portion may set type and content of the parameter as the search criterion; and the channel extracting means may extract the one or more channels having a parameter agreeing with the type and content of the parameter set as the search criterion. Furthermore, the parameter memory may also store channel identification information which is previously provided for each channel in order to identify the channel but is irrelevant to signal processing performed by the signal processing portion of the channel as a parameter in a manner in which the channel is correlated with the channel identification information; the search criterion setting portion may set the channel identification information as the search criterion; and the channel extracting means may extract the one or more channels having a parameter which agrees with the channel identification information set as the search criterion.

Furthermore, the search criterion setting portion may have a criterion memory (12) adapted for storing a search criterion set by the search criterion setting portion; and the channel extracting means may extract the one or more channels in accordance with the search criterion stored in the criterion memory. In this case, the criterion memory stores selectable combinations of criteria.

The above-described sound signal processing apparatus of the present invention facilitates settings of a user interface on which channel strips of desired channels are disposed.

Furthermore, the present invention is not limited to the invention of the sound signal processing apparatus, but can be carried out as an invention of a method for processing sound signal and an invention of a computer program for sound signal processing.

### BRIEF DESCRIPTION OF THE DRAWINGS

FIG. 1 is a diagram indicative of a hardware configuration of a digital mixer which is an embodiment of a sound signal processing apparatus of the present invention;
FIG. 2 is a diagram indicative of a detailed configuration of signal processing performed by a DSP indicated in FIG. 1;
FIG. 3 is a diagram indicative of a configuration of a part of the signal processing performed by the DSP, the part relating to input of signals from an input channel to ST buses and MIX buses;
FIG. 4 is a diagram indicative of a configuration of parameters of an input channel of the digital mixer indicated in FIG. 1;
FIG. 5 is a diagram indicative of a configuration of a mixing system including the digital mixer which is indicated in FIG. 1 and is a modification of the sound signal processing apparatus of the present invention;
FIG. 6 is a diagram indicative of a schematic configuration of an operating panel of the digital mixer indicated in FtG. 1;
FIG. 7 is an example screen at which a user sets channel assignment for a user layer;
FIG. 8 is a different example screen at which a user sets channel assignment for a user layer;
FIG. 9 is example data relating to user layers which the digital mixer indicated in FIG. 1 has;
FIG. 10 is a flowchart of a process carried out by a CPU of the digital mixer indicated in FIG. 1 when any layer selection key included in a user layer selection key group has been depressed;
FIG. 11 is a diagram indicative of an example connection of pieces of hardware of a case in which a DAW application is operated by use of a physical controller; and
FIG. 12 is a flowchart of a process carried out by a CPU of a PC which executes the DAW application in a case where any of layer selection buttons is depressed in a modified example in which "Hide" is available.

### DESCRIPTION OF THE PREFERRED EMBODIMENT

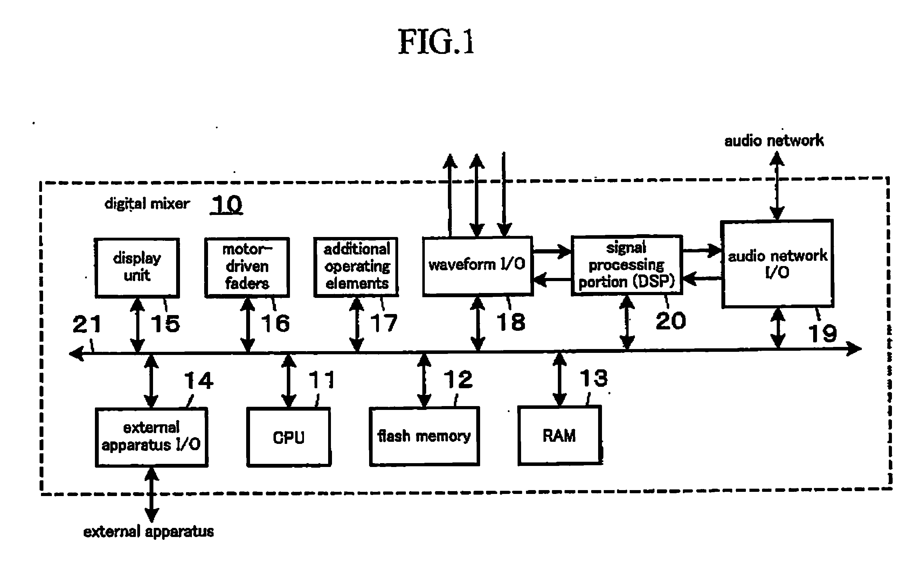

An embodiment of the present invention will now be concretely described with reference to the drawings. FIG. 1 shows a hardware configuration of the digital mixer which is the embodiment of the sound signal processing apparatus of this invention. As indicated in FIG. 1, a digital mixer 10 has a CPU 11, a flash memory 12, a RAM 13, an external apparatus input/output portion (I/O) 14, a display unit 15, motor-driven faders 16. additional operating elements 17, a waveform I/O 18, an audio network I/O 19 and a signal processing portion (DSP) 20 which are connected with each other by a system bus 21.

The CPU 11, which is a control portion managing and controlling operation of the digital mixer 10,executes certain programs stored in the flash memory 12 to control the input/output of data and signals at the external apparatus I/O 14, the waveform I/O 18 and the audio network I/O 19, and the display on the display unit 15 and to detect operation of the motor-driven faders 16 and the additional operating elements 17 to perform various processing such as setting/changing parameter values and controlling operations of various parts in accordance with the detected operation.

The flash memory 12 is a rewritable nonvolatile storage portion for storing a control program which is to be executed by the CPU 11. The RAM 13 is a storage portion which stores data which should be temporarily stored and is used as a working memory for the CPU 11.

The external apparatus I/O 14 is an interface for enabling the digital mixer 10 to connect with various external apparatus to allow input/output between the digital mixer and the external apparatuses. Examples of the interface of the external apparatus I/O 14 include interfaces for connecting an external display, a mouse, a keyboard for inputting letters, an operating panel and the like. Even if the digital mixer 10 is configured by a simple display unit and simple operating elements, a user of the digital mixer 10 is able to set/change parameters and to make various instructions by use of these external apparatuses.

The display unit 15, which is a display portion for displaying various kinds of information under the control of the CPU 11, can be configured by a liquid crystal panel (LCD) and light-emitting diodes (LEDs), for example. The digital mixer 10 described in this example has the display unit 15 which has at least an LCD of a size which can display a graphical user interface (GUI) for accepting user's operation for referring to parameter values and setting parameter values.

The motor-driven faders 16 are operating elements for accepting manipulation of parameters indicated by the faders which will be described later. The motor-driven faders 16 have drive portions so that knobs of the motor-driven faders 16 can automatically move to desired positions under the control of the CPU 11. The additional operating elements 17, which are operating elements which are provided in order to accept manipulation of the digital mixer 10 and exclude the motor-driven faders 16, can be configured by various keys, buttons, rotary encoders, sliders and the like. In this example, although a touch panel laminated on the LCD which is the display unit 15 is used, the touch panel is also included in the additional operating elements 17.

The waveform I/O 18 is an interface which receives input of sound signals which are to be processed by the DSP 19 and outputs the processed sound signals. To the waveform I/O 18, a desired combination selected from among A/D conversion boards each enabling analog input of 4 channels, D/A conversion boards each enabling analog output of 4 channels and digital input/output boards each enabling digital input/output of 8 channels can be inserted, so that signals are actually input/output through these inserted boards. The audio network I/O 19 is an interface for transmitting/receiving digital sound signals by a plurality of transmission channels between the digital mixer 10 and a different apparatus through a later-described audio network and for transmitting/receiving control signals.

The DSP 20 is a signal processing portion which includes a signal processing circuit, performs various kinds of signal processing on sound signals input from the waveform I/O 18 or the audio network I/O 19 such as mixing and equalizing in accordance with various processing parameters set as control data, and output the processed signals to the waveform I/O 18 or the audio network I/O 19. Control data including parameters used for the various kinds of processing is stored in a parameter memory provided on the RAM 13 or on a memory of the DSP 20 itself so that a user can check or change values of the data by use of the display unit 15, the motor-driven faders 16 and the additional operating elements 17.

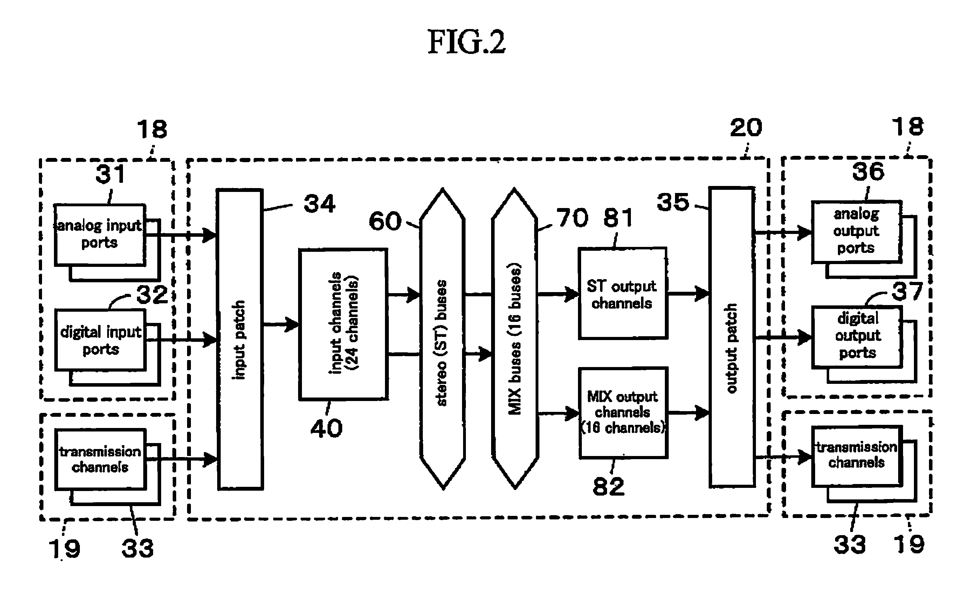

Next, FIG. 2 indicates detailed configuration of signal processing performed by the DSP 20 indicated in FIG. 1. As indicated in FIG. 2, the signal processing performed by the DSP 20 has an input patch 34, input channels 40, stereo (ST) buses 60, mixing (MIX) buses 70, ST output channels 81, MIX output channels 82 and an output patch 35.

In the DSP 20, either analog input ports 31 or digital input ports 32 provided for the waveform I/O 18 to correspond to input terminals are patched (connected) to the 24 input channels 40, respectively. From among sound signals transmitted to the audio network I/O 19, furthermore, sound signals supplied from a desired transmission channel 33 can be selected to be patched to the input channel 40. At each of the input channels, signals input from the patched port or transmission channel are processed by an attenuator, equalizer and the like to be transmitted to a desired bus selected from among the ST buses 60 and the MIX buses 70 having 16 buses. The switching between on/off and the level control of the transmission of the processed signals can be done for each combination of the input channel 40 and the bus.

At the ST buses 60 and the MIX buses 70, signals input from the input channels 40 are mixed, so that the signals mixed at the ST buses 60 are output to the ST output channels 81, and the signals mixed at the MIX buses 70 are output to the respective MIX output channels 82 of 16 channels. At the output channels 81 and 82, signals input from their corresponding buses are processed by an equalizer, a compressor and the like.

By the output patch 35, the respective output channels 81, 82 are patched to analog output ports 36 and digital output ports 37 provided for the waveform I/O 18 to correspond to output terminals, or the transmission channels 33 of the audio network I/O 19 so that the processed signals will be supplied to the patched output ports or transmission channels to be output from the output ports or the transmission channels.

The manner of the signal processing performed by the respective parts of the DSP 20 can be controlled in accordance with settings of certain parameter values stored in the parameter memory. In addition, functions of the respective parts may be realized either by software or hardware.

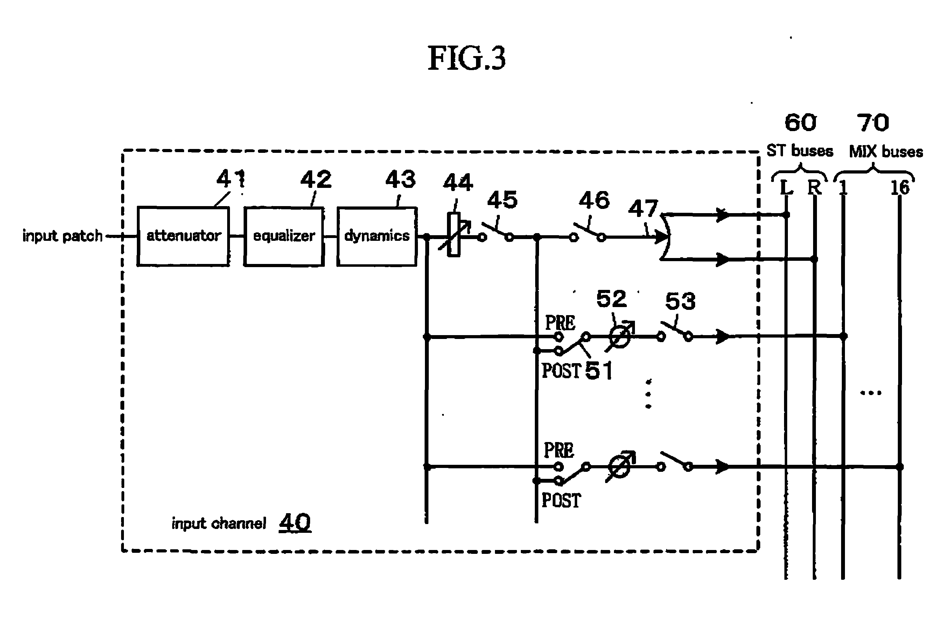

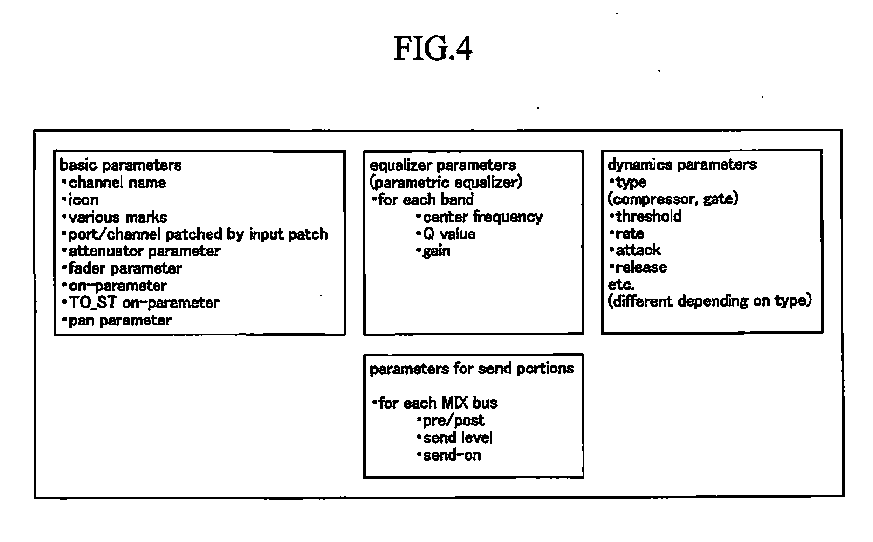

Next, FIG. 3 indicates a configuration of a part of the signal processing performed by the DSP 20, the part corresponding to input of signals from one input channel to the ST buses 60 and the MIX buses 70. FIG. 4 indicates respective configurations of parameters which are included in the parameters stored in the parameter memory and which relate to one input channel.

As indicated in FIG. 4, parameters for the input channel are classified under four parameter groups: ("basic parameters (basics)", "equalizer parameters (EQ)", "dynamics parameters (Dyna)" and "parameters for send portion (Send)"). As indicated in FIG. 3, furthermore, each of the input channels 40 is provided with an attenuator 41, an equalizer 42, a dynamics 43, a channel fader 44 and an on-switch 45. After these components, furthermore, a TO_ST (to stereo) switch 46 and a pan 47 are provided at a path through which signals are input to the ST buses 60.

By the attenuator 41, sound signals input to the input channel 40 from a port or a transmission channel patched to the input channel by the input patch 34 are controlled to have a level appropriate to the signal processing on the basis of an attenuator parameter included in the basic parameters shown in FIG. 4. By the equalizer 42, the frequency response of the sound signals is controlled on the basis of the equalizer parameters. By the dynamics 43, the amplitude of the sound signals is controlled in accordance with dynamic variation characteristics on the basis of the dynamics parameters. By the channel fader 44, furthermore, the sound signals are controlled to have a level appropriate to mixing at the ST buses on the basis of a fader parameter.

The equalizer 42 is configured by a parametric equalizer having respective parameters of center frequency, Q value and gain for each of a plurality of bands. The dynamics 43 can be either a compressor type or a gate type. According to the type, the dynamics 43 has parameters such as threshold, rate, attack and release.

Signals output from the channel fader 44 pass through the on-switch 45 and the TO_ST switch 46 if on-parameters corresponding to the switches are set at "on", respectively, so that the "L" and "R" levels of the signals are individually controlled in accordance with pan parameter by the pan 47 to be input to the "L" and "R" ST buses 60, respectively.

At a path through which signals are transmitted to the MIX buses 70, a send portion including a PRE/POST switch 51, a send level fader 52, and a send-on switch 53 is provided for each bus. At each send portion provided for each bus to which signals are to be transmitted, the PRE/POST switch 51 selects signals situated at a position indicated by PRE/POST parameter in the path of the input channel (that is, in a case of a PRE/POST parameter indicative of PRE, signals situated in front of the channel fader 44, and in a case of a PRE/POST parameter indicative of POST, signals situated behind the on-switch 45). The send level fader 52 then controls the selected signals to have a level appropriate to mixing at the corresponding bus in accordance with send level parameter. If a corresponding on-parameter is set at "on", the signals pass through the send on switch 53 to be input to the bus.

Parameters of an input channel also include parameters such as channel name, icon and various marks which do not directly relate to signal processing at the channel. A user can define a string of desired characters as the name of the channel. Furthermore, the user can select a desired icon from among icons representative of vocal, guitar, piano and the like as an icon of the channel. When parameters of the channel are displayed on a touchscreen 102. the user's defined channel name and icon of the channel are also displayed as supplementary information. The channel name, icon, various marks and the like are parameters serving as channel identification information which has been previously given to the channel in order to identify the channel and which is nothing to do with signal processing.

The user can also define desired marks to provide the defined marks for user's desired channels, respectively. Examples of such marks include "adjustment required", "drum set A", "band C", and "recorder B". The marks are provided for the sake of searching. By specifying a user's desired mark as a criterion for searching for a channel, a channel having the mark will be extracted. As one of parameters of an input channel, furthermore, a keyword which is a character string for searching may be stored and provided for each channel so that the user can search for a channel on the basis of a keyword of the channel.

Although FIG. 3 indicates the detailed configuration of one of the input channels, the other 23 input channels are also configured similarly. At the ST buses 60 and the MIX buses 70, therefore, signals input from the 24 input channels can be mixed.

Each of the MIX output channels 82 has a configuration which is not shown but is similar to the configuration ranging from the attenuator 41 to the on-switch 45 of the input channel 40, so that sound signals output from the corresponding MIX bus 70 are processed in accordance with parameters (except parameters for the send portion) configured similarly to those of the input channel 40 to be output to a port or a transmission channel patched by the output patch. Furthermore, the ST output channels 81 have a configuration similar to the configuration of the MIX output channels 82 except that parameters for signal processing on the "L" side are linked with parameters on the "R" side.

By use of the audio network I/O 19, the above-described digital mixer 10 can connect to an audio network with which different apparatuses are connected so that the digital mixer 10 and the apparatuses can operate as a mixing system. The expression "operating as a mixing system" indicates that the operation of the apparatuses connected with each other through the network will be controlled by use of a user interface of at least one of the apparatuses.

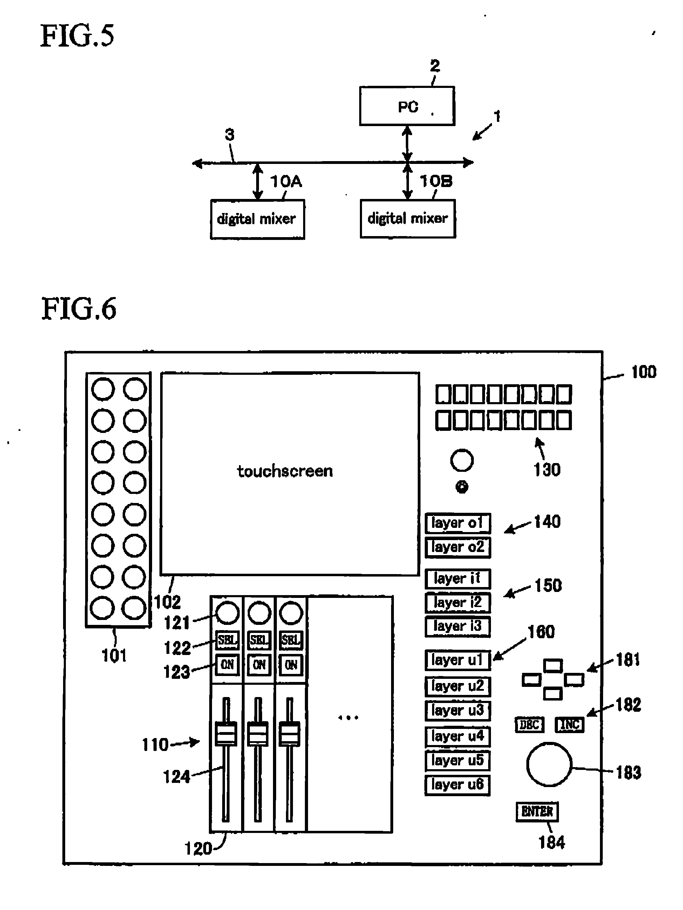

FIG. 5 indicates an example of such a mixing system. In this case, a PC (personal computer) 2 and two digital mixers 10A and 10B having the same hardware configuration as that of the digital mixer 10 are connected with each other by use of an audio network 3 to form a mixing system.

The audio network 3 is a network which enables real-time transmission of audio signals of a plurality of channels from a desired apparatus to a different desired apparatus, and transmission of control signals for instructing to set parameters, retrieving parameter values and the like from a desired apparatus to a different desired apparatus (see a network interface 107 described in Japanese Unexamined Patent Publication No. 2007-258966, for example). The content of Japanese Unexamined Patent Publication No. 2007-258966 is included in this specification.

Any communication standards can be employed. For example, any one of USB (trademark), IEEE 1394 (trademark), Dante (trademark), EtherSound (trademark) can be used. Alternatively, a network which allows transmission of control signals but will not allow transmission of audio signals may be employed by transmitting audio signals with a separate cable or a separate network.

Furthermore, the network employed in this mixing system is not necessarily a network which can designate an address of an apparatus to which signals will be transmitted. For example, even a cable for cascade-connection of mixers (see cascade I/O 17 described in Japanese Unexamined Patent Publication No. 2008-227761, for example) or a MADI (trademark) cable enables transmission of digital audio signals and control signals. The content of Japanese Unexamined Patent Publication No. 2008-227761 is included in this specification. In other words, this mixing system can employ any communication medium as long as control signals can be transmitted/received between the apparatuses by any communications medium.

The PC 2 can be a known PC having hardware such as CPU, ROM, RAM, HDD (hard disk drive) and communication I/F (interface). In a case where a DAW application is executed on an OS of the PC 2, sound signals supplied from the digital mixers 10A and 10B to the PC 2 through the network 3 or the like, and sound signals reproduced on an audio track undergo various kinds of signal processing on the PC 2 in accordance with parameter values stored in a parameter memory of the RAM. The processed sound signals can be recorded on a different audio track or supplied to the digital mixers 10A and 10B from the PC 2 through the network 3 or the like. Furthermore, the PC 2 may be provided with an audio I/F in order to directly receive sound signals externally to process the externally received signals and to externally output processed sound signals directly.

Signal processing performed by the PC 2 may be mixing processing which is similar to the processing performed by the digital mixers 10A and 10B, or mixing processing which is different in scope and configuration from the processing performed by the digital mixers 10A and 10B. Alternatively, signal processing performed by the PC 2 may be specialized in one or a plurality of various kinds of effect processing such as equalizing process, compressing process, reverb process and three-dimensional localization control process.

The digital mixer 10A (or 10B) variously processes sound signals which have been externally input through the waveform I/O 18 and sound signals supplied from the digital mixer 10B (or 10A) and the PC 2 through the network 3 or the like in accordance with parameter values stored in the parameter memory of the digital mixer, and then externally outputs the processed sound signals through the waveform I/O 18 or supplies the processed sound signals to the digital mixer 10B (or 10A) and the PC 2 through the network 3 or the like.

As for signal processing performed by the digital mixers 10A and 10B, each of the digital mixers 10A and 10B may individually perform the mixing processing described with reference to FIG. 2 and FIG.3. Alternatively, the digital mixers 10A and 10B may perform the mixing processing by sharing the processing among a plurality of apparatuses (see FIG. 4 of Japanese Unexamined Patent Publication No. 2007-258966 and FIG. 4 of Japanese Unexamined Patent Publication No. 2008-227761, for example). In both the cases, each of the PC 2 and the digital mixers 10A and 10B has a plurality of channels (input channels and output channels) whose parameter values should be controlled. In this mixing system, a user can change the parameter values of the three apparatuses of the PC 2 and the digital mixers 10A and 10B by use of a user interface of any one of the PC 2 and the digital mixers 10A and 10B.

Next, a configuration of an operating panel of the digital mixer 10 will be explained. FIG. 6 indicates a schematic configuration of the operating panel. The digital mixer 10 has an operating panel 100 having a configuration as indicated in FIG. 6. On the operating panel 100, various kinds of user interfaces such as a send level setting portion 101, a touchscreen 102, an assigned channel strip portion 110 having a plurality of channel strips 120, various keys 130, an output layer selection key group 140, an input layer selection key group 150, a user layer selection key group 160, cursor keys 181, increase/decrease keys 182, a rotary encoder 183 and an enter key 184 are provided. These components correspond to the display unit 15, the motor-driven faders 16 and the additional operating elements 17 indicated in FIG. 1.

The send level setting portion 101 has 16 rotary encoders for setting respective send level parameters for the send level faders 52 provided at the path through which signals are to be transmitted to the MIX buses 70 from an input channel currently selected by use of a selection key 122 provided for a channel strip 120. The touchscreen 102 is configured by laminating a touch panel on an LCD so that the touchscreen 102 can display a GUI for accepting user's operation for referring to parameter values and setting parameter values which are to be used for signal processing, and can serve as an accepting portion for accepting user's operation.

The assigned channel strip portion 110 has 8 vertically extending strip-shaped channel strips 120 which are connected with each other in a lateral direction and each of which is provided for editing a parameter value of an input channel or an output channel. The channel strips 120 are assigned channels of a layer selected by user's operation of any layer selection key of the output layer selection key group 140, the input layer selection key group 150, and the user layer selection key group 160, so that the assigned channel strip portion 110 serves as an operating portion which enables the user to edit parameters of the assigned channels.

Each channel strip 120 has a channel knob 121, a selection key 122, an on-key 123 and a fader 124. The channel knob 121 is a rotary encoder which detects the amount of rotation of the knob as an amount by which the user has operated the channel knob 121. Although detailed explanation will be omitted, the channel knob 121 may be assigned an operating element displayed on the touchscreen 102 so that the channel knob 121 will be used for editing a value of a parameter corresponding to the displayed operating element.

The selection key 122 is an operating element for switching the channel assigned to the channel strip between a state where the channel has been selected and a state where the channel has not been selected. In accordance with user's operation of the selection key 122, the CPU 11 of the digital mixer 10 selects the channel assigned to the channel strip 120 to which the operated selection key 122 belongs, and cancels the selection of a channel which has been selected before. The on-key 123 is an operating element for switching the channel assigned to the channel strip between on and off (in a case where the channel strip is assigned an input channel, switching the on-switch 45 indicated in FIG. 3 between on and off).

The fader 124 is an operating element for specifying a level of signals of the channel assigned to the channel strip (in a case where the channel strip is assigned an input channel, the level control by the channel fader 44 indicated in FIG. 3). The knob of the fader 124 can be motor-driven. More specifically, in a case where a parameter value corresponding to the fader 124 has been changed by a change in layer, reading of a parameter value, editing of a parameter by a different operating element or the like, the CPU 11 of the digital mixer 10 drives a motor of the fader to move the knob to a position corresponding to the changed value.

The output layer selection key group 140, the input layer selection key group 150, the user layer selection key group 160 are layer selection key groups each having layer selection keys for selecting a layer whose channels included in the input channels 40, the MIX output channels 82, or the like will be assigned to the channel strips 120 of the assigned channel strip portion 110.

As for the output layer selection key group 140, the 16 MIX output channels 82 are divided into two layers each having 8 channels: the first output layer (the 1st to 8th MIX output channels) and the second output layer (the 9th to 16th MIX output channels). The output layer selection key group 140 has two layer selection keys "o1" and "o2" for selecting either of the two layers. As for the input layer selection key group 150, the 24 input channels 40 are divided into three layers each having 8 channels: the first input layer (the 1st to 8th input channels), the second input layer (the 9th to 16th input channels), and the third input layer (the 17th to 24th input channels). The input layer selection key group 150 has three layer selection keys "i1" to "i3" for selecting one of the three input layers.

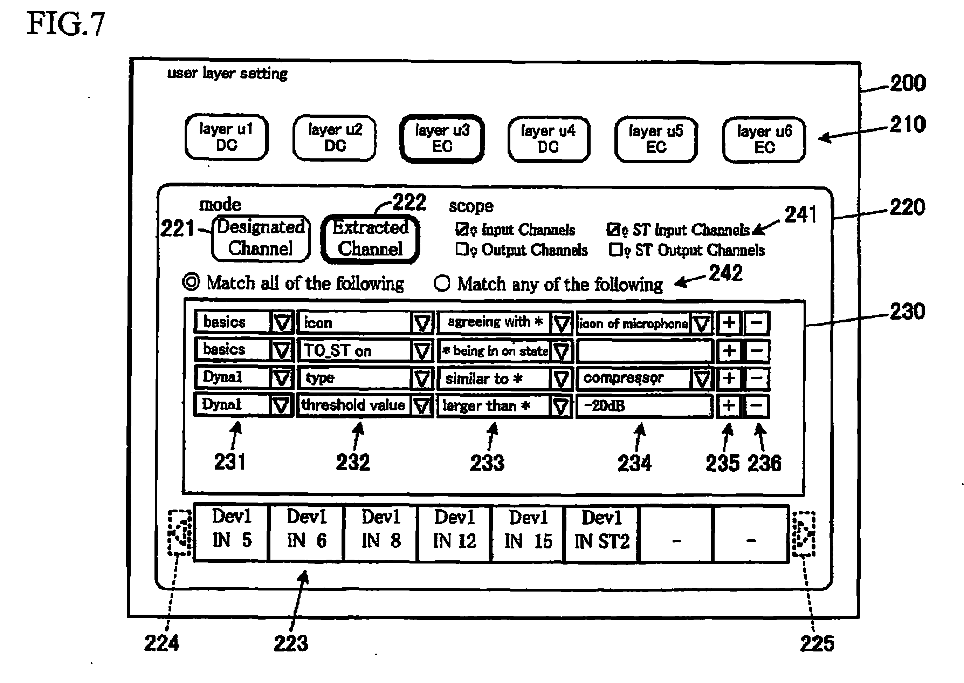

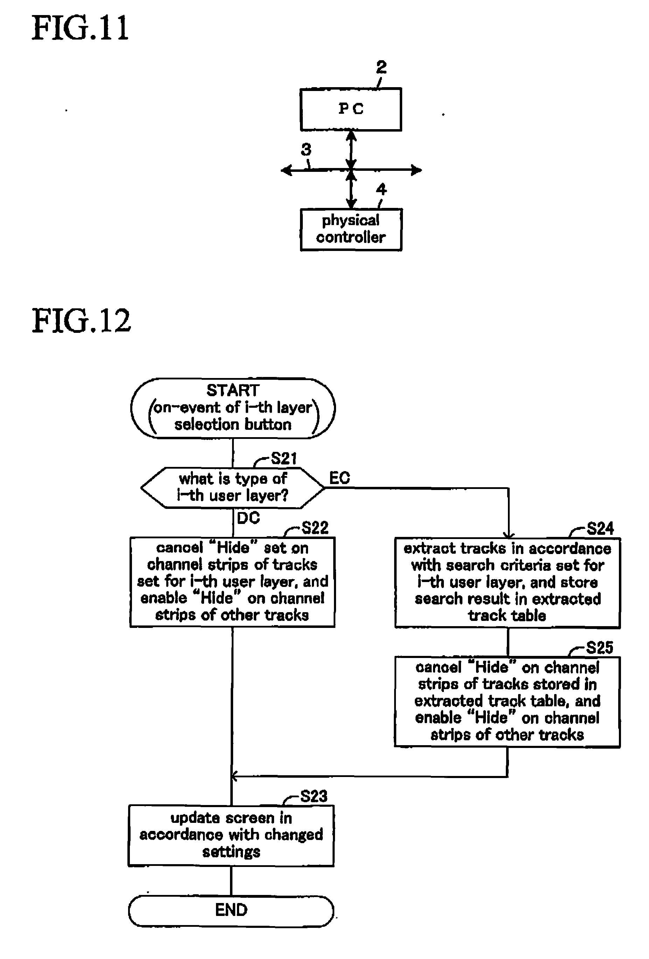

In response to user's operation of any layer selection key of the output layer selection key group 140 and the input layer selection key group 150, a layer corresponding to the operated layer selection key is selected, so that 8 channels belonging to the selected layer are assigned to the 8 channel strips of the assigned channel strip portion 110. In response to the assignment of the channels, the touchscreen 102 displays a layer screen which includes images of 8 channel strips which indicate parameters of the 8 channels. In Japanese Unexamined Patent Publication No. 2007-074359, a concrete example (FIG. 7) of such a layer screen is disclosed. The content of Japanese Unexamined Patent Publication No. 2007-074359 is contained in this specification. The layer screen is displayed on the touchscreen 16 in accordance with user's operation of selecting a layer (FIG. 11).

As indicated in FIG. 5, in a case where the mixing system configured by a plurality of apparatuses connected with each other by a network is controlled by use of the user interface of the digital mixer 10 (10A or 10B), the number of layer selection keys included in the output layer selection key group 140 and the input layer selection key group 150 is not large enough to cover selectable layers. In such a case, therefore, some of the various keys 130 may serve as apparatus selection keys for selecting the apparatuses, respectively, so that the user can select a desired layer by combined use of the layer selection key and the apparatus selection key.

The above-described case will now be explained concretely. In response to user's operation of one of the apparatus selection keys, an apparatus which is included in the apparatuses of the mixing system and corresponds to the operated apparatus selection key will be selected as a target apparatus which will be controlled, while in response to user's operation of one of the layer selection keys, one of the layers of the target apparatus will be selected. As a result, 8 channels belonging to the selected layer are to be assigned to the 8 channel strips of the assigned channel strip portion 110.

To the 8 channel strips of the assigned channel strip portion 110 of the digital mixer 10A, as described above, the 8 channels of the user's desired layer of the user's desired apparatus of the mixing system can be assigned. Therefore, the user can control the mixing system by use of the user interface of the digital mixer 10A. The similar control of a mixing system is disclosed in FIG. 13 and FIG. 15 of Japanese Unexamined Patent Publication No. 2008-227761.

The user layer selection key group 160 has 6 layer selection keys "u1" to "u6" which enable the user to select one of the 6 user layers to assign user's selected channels to the 1st to 6th channel strips 120. The user can specify each of the channels belonging to a layer which is to be assigned to the channel strips 120 one by one. Alternatively, the user can also provide criteria to extract channels which satisfy the criteria to assign the extracted channels to the channel strips 120. In addition, the user can further edit the assignment of the extracted channels to the channel strips 120. This function relating to the user layer is one of the features of this embodiment. The function relating to the user layer will be described in detail later.

The cursor keys 181 are the keys for moving a cursor on a GUI displayed on the touchscreen 102. The increase/decrease keys 182 are the keys for editing a value of a parameter at which the cursor is situated. The rotary encoder 183 is also an operating element for editing the parameter value. The enter key 184 is the key for confirming the edited result.

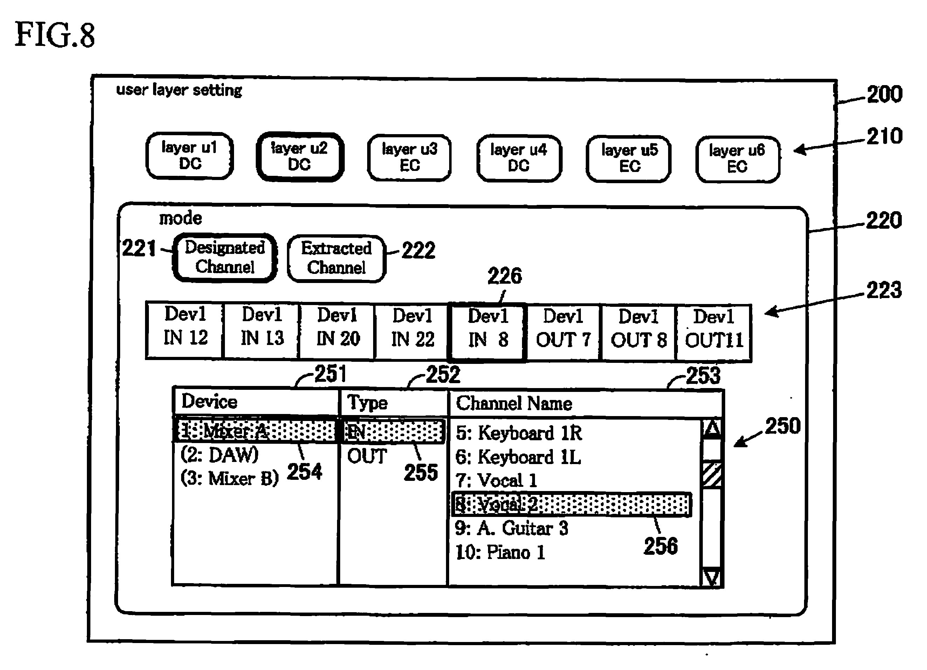

Next, the above-described function of the user layer will be explained in detail. FIG. 7 and FIG. 8 indicate example screens which are the screens displayed on the touchscreen 102 in accordance with user's operation of a screen selection key included in the various keys 130 or in accordance with user's certain operation on the touchscreen 102 and which are the screens for accepting user's setting of channel assignment in a user layer.

On the digital mixer 10, a user layer can be used as either of two types: an extracted channel (EC) type and a designated channel (DC) type. The EC type is a type in which channels which satisfy user's defined search criteria are extracted from the channels of the digital mixer 10 and the channels of the other apparatuses that can be controlled by use of the digital mixer 10, so that the extracted channels are to be assigned to the channel strips 120. The DC type is a type in which the user specifies each of the channels one by one which are to be assigned to the channel strips 120.

The user is able to select the type for each of the 6 user layers corresponding to the keys "u1" to "u6". FIG. 7 indicates an example screen for setting a user layer of a case where the layer is the EC type. FIG. 8 indicates an example screen for setting a user layer of a case where the layer is the DC type.

In a user layer setting screen 200 indicated in FIG. 7, a layer selection button group 210 and a layer setting portion 220 are provided. The layer selection button group 210 has 6 buttons which are buttons for selecting a layer for which assignment is to be made on the layer setting portion 220, and correspond to the 6 user layers "u1" to "u6". Each of the buttons indicates whether the corresponding layer is currently set at the DC type or the EC type.

FIG. 7 indicates a state where the user layer "u3" set at the EC type has been selected, so that the layer setting portion 220 indicates a GUI for accepting the setting of the EC type. In the EC type, the layer setting portion 220 has a DC type selection button 221, an EC type selection button 222, an assigned channel display portion 223, scroll buttons 224 and 225, a search criterion setting portion 230, a search scope selection portion 241, and an and/or selection portion 242.

The DC type selection button 221 and the EC type selection button 222 are buttons for selecting type of a selected user layer. By a depression of either of the type selection buttons, either the DC type or the EC type can be selected to be set as the type of the user layer "u3". By a thick frame of the EC type selection button 222, FIG. 7 indicates a state where the EC type has been selected. In a case where the user operates the DC type selection button 221 to switch the user layer "u3" from the EC type to the DC type, the layer selection button group 210 keeps indicating the state where the layer selection button of the user layer "u3" has been selected, but the display format of the layer setting portion 220 switches from the format of FIG. 7 to that of FIG. 8.

The assigned channel display portion 223 is a display portion for displaying extracted channels searched on the basis of search criteria currently set for the user layer "u3". In a case where the user layer setting screen of FIG. 7 is displayed, and in a case where the layer selection key 160 corresponding to the user layer "u3" has been operated by the user, channels displayed on the assigned channel display portion 223 are to be assigned to the 8 channel strips 120, respectively.

The scroll buttons 224 and 225 are buttons for switching a block of 8 channels which are to be actually assigned to the channel strips 120 frontwards or backwards in a case where there are more than 8 channels extracted as possible channels which can be assigned to the channel strips 120. Suppose that a change in the search criteria (suppose that the layer selection button 210 corresponding to the user layer has been operated for the first time) results in 22 extracted channels, for example, the 1st to 8th channels of the 22 channels will be first assigned to the channel strips. By a user's depression of the scroll button 225, the assigned channels will be switched to the 9th to 16th channels. By user's repeated depressions of the scroll button 225, the assigned channels will be further switched to the 17th to 22nd channels (the last two channels will remain vacant) to return to the 1st to 8th channels (or to keep the last 17th to 22nd channels). As described above, the channel assignment can be switched as if pages are turned to the next pages in sequence. The channel assignment can be also switched similarly in a reverse direction. By repeated depressions of the scroll button 224, more specifically, the channel assignment will be switched from the 17th to 22nd channels to the 9th to 16th channels to be further switched to the 1st to 8th channels to return to the 17th to 22nd channels (or to keep the first 1st to 8th channels). By repeated depressions of the scroll button 224, as described above, the channel assignment can be sequentially switched to the previous pages. In the example of FIG. 7, because the extracted channels are only six channels which will not require scrolling, the scroll buttons 224 and 225 are disabled.

The search criterion setting portion 230 is an area at which the user sets search criteria for extracting channels which are to be assigned to the channel strips 120. In this area, a parameter group selection field 231, a parameter selection field 232, an option selection field 233, a value specification field 234, a criterion addition button 236 and a criterion deletion button 236 are provided. Fields contained in each row shown in FIG. 7 indicate one criterion, so that the user can set search criteria by combining a plurality of criteria.

The parameter group selection field 231 and the parameter selection field 232 are the fields for selecting a parameter which is to be used in a criterion. The user will make a rough selection of group at the parameter group selection field 231 (any one of "basics", "EQ", "Dyna", "Send" will be selected), while the user will select an individual parameter belonging to the selected group in the parameter selection field 232.

The option selection field 233 and the value specification field 234 are the fields for specifying a detailed criterion which the parameter selected in the parameter group selection field 231 and the parameter selection field 232 should satisfy. At the option selection field 233, the user may specify not only a criterion which a parameter of one channel should individually satisfy as indicated in the examples shown in FIG. 7 such as "agreeing with *", "on-state", "similar to *", "larger than *" but also a criterion which a parameter of one channel should satisfy in association with a parameter of a different channel such as "the same value as channel of *. In addition, the user may specify not only a criterion which should be satisfied by a parameter which is to be used for signal processing but also a criterion which should be satisfied by a parameter which will not be used for signal processing such as "channel name is xx", "having a mark of drum set "A"" and "including "xx" as a keyword". More specifically, the search criteria can include the type or the content of a parameter, and channel identification information for identifying channel which is previously provided for each channel.

The value specification field 234 is a field for specifying a value applied to "*" of an option selected in the option selection field 233. There are cases such as the criteria of the first and third rows in which the user is to select a desired option indicated in a pull-down menu, while there are other cases such as the criterion of the fourth row in which a value is to be input by the user. Furthermore, there are also cases such as the criterion of the second row where user's specification is not required in the value specification field 234.

Options provided for the option selection field 233 are previously defined in accordance with the type of parameter so that the options of the option selection fields 233 will be changed in accordance with the parameter selected in the parameter selection field 232. The input style and options of the value specification field 234 are previously defined to correspond to the type of parameter and the options of the option selection field 233 so that the input style and options of the value specification field 234 will be changed in accordance with the parameter selected in the parameter selection field 232 and the option selected in the option selection field 233.

The criterion addition button 235 is a button for adding a row of criterion. The criterion deletion button 236 is a button for deleting a corresponding row of criterion.

The search scope selection portion 241 is an area at which the user sets a search scope for extracting channels. In the example of FIG. 7, the user is allowed to define, individually, whether the input channels 40, the MIX output channels 82, the ST input channels (not shown in FIG. 3), and the ST output channels 81 will be included in the search scope or not. In a case where the digital mixer 10 is able to control external apparatuses connected through the audio network 3 or the like, though such a case is not shown in the figure, the search scope selection portion 241 may also include the external apparatuses so that the user can define, individually, whether each of the apparatuses will be included in the search scope or not.

The and/or selection portion 242 is an area at which the user determines whether a search will be performed as an AND search by which the search criteria of the respective rows set at the search criterion setting portion 230 will be combined with "AND", or as an OR search by which the search criteria of the respective rows set at the search criterion setting portion 230 will be combined with "OR".

Examples of search criteria which can be set in the layer setting portion 220 include "the send-on switch to the third MIX bus is in the on-state, and the send level to the third MIX bus is set at -10 dB or higher", "a drum mark is given, and the send-on switch to the fifth MIX bus is in the on-state", and "an input from an input channel is connected to the s-th slot (any of input ports) of a certain device".

Each setting made by the user on the layer setting portion 220 is retained in the flash memory 12 at each manipulation of an operating element contained in the layer setting portion 220. In response to a depression of a corresponding layer selection key 160 on the operating panel 100, the search criteria provided at that point in time are referred to extract channels which satisfy the set criteria to assign the extracted channels to the channel strips 120. In addition, the touchscreen 102 displays a layer screen including respective images of the channel strips to which the channels are assigned.

Furthermore, the user layer function may be designed such that in a case as well where an EC layer has been selected is a layer to be edited by the operation of a button of the layer selection button group 210 provided on the user layer setting screen 200, a channel search is performed on the basis of criteria set at the time of the selection of the EC layer to refresh the assignment of channels to the channel strips 120 and the display on the assigned channel display portion 223.

Next, FIG. 8 indicates a state where the user layer "u2" set at the DC type has been selected. Although the form in which the layer selection button group 210 is displayed is similar to that of FIG. 7, the layer setting portion 220 indicates a GUI for accepting the setting of the DC type. In the DC type, the layer setting portion 220 has the DC type selection button 221, the EC type selection button 222, the assigned channel display portion 223 and a channel selection portion 250.

The DC type selection button 221 and the EC type selection button 222 function as in the case of the EC type shown in FIG. 7. By a thick frame of the DC type selection button 221, FIG. 8 indicates a state where the DC type has been selected. In a case where the user operates the EC type selection button 222 to switch the user layer "u2" from the DC type to the EC type, the layer selection button group 210 keeps indicating the state where the layer selection button of the user layer "u2" has been selected, but the display format of the layer setting portion 220 switches from the format of FIG. 8 to that of FIG. 7.

The assigned channel display portion 223 of the DC type is different from that of the EC type not only in that the position at which the assigned channel display portion 223 is displayed is different but also in that the displayed 8 channels are not the 8 channels extracted by a search but are the 8 channels which have been individually selected for the 8 channel strips 120. However, the assigned channel display portion 223 of the DC type is similar to that of the EC type in that in response to user's operation of the layer selection key corresponding to the user layer "u2", the channels displayed on the display portion are assigned to the 8 channel strips 120, respectively. A cursor 226 indicates the channel strip to which a channel selected in the channel selection portion 250 will be assigned. By touching or clicking on the frame corresponding to a desired channel strip, the user can define the desired channel strip as a channel strip to which a selected channel will be assigned.

The channel selection portion 250 is an area at which a channel which will be assigned to the channel strip is selected. The channel selection portion 250 has an apparatus selection field 251, a channel type selection field 252 and a channel selection field 253. The apparatus selection field 251 is an area at which the user selects an apparatus whose channel will be assigned from among the apparatuses which can be controlled by use of the digital mixer 10. In a case where the digital mixer 10 is not connected to any apparatuses through a network, the apparatus selection field 251 will display only the digital mixer A (Mixer A). In a case where the digital mixer 10 is connected with a plurality of apparatuses through a network as indicated in FIG. 5, the apparatus selection field 251 will display the two digital mixers 10A (Mixer A) and 10B (Mixer B), and a DAW application (DAW) operating on the PC 2 as options.

The channel type selection field 252 is an area at which the user selects the type of channel which is included in the channels of the apparatus which has been selected at the apparatus selection field 251 and will be assigned to the channel strip. In the case of FIG. 8, input (IN) and output (OUT) are selectable. The options provided for this field vary among apparatuses. The channel selection field 253 is an area at which the user selects a channel which is included in the channels of the type, selected at the channel selection field 252 and will be assigned to the channel strip. In the case of FIG. 8, although the 5th to 10th input channels are displayed, the screen can be scrolled to display the other input channels.

The channel currently selected at the channel selection portion 250 is indicated by cursors 254 to 256, and is reflected on the channel display portion 223. The user is able to switch from one channel strip to which a channel is to be assigned to another on the assigned channel display portion 223 so that the user can individually change the channels which will be assigned to the channel strips on the channel selection portion 250.

In a case where the user operates the DC type selection button 221 in a state where a user layer of EC type has been selected, the type of the layer immediately switches to DC type to immediately switch the display of the layer setting portion 220 to the display explained with reference to FIG. 8. As initial values of the 8 channels assigned to the channel strips of the user layer whose type has been switched to DC type, the 8 channels displayed on the assigned channel display portion 223 of the EC type screen are automatically set. By use of the layer setting portion 220 of the DC type, the user can edit the channel assignment to the channel strips made in accordance with the search result performed in the EC type so that the user can individually change the assignment of a channel to each channel strip. In a case where some of the channels extracted in the EC type are different from what the user has intended, therefore, the user can switch the layer to the DC type to fine-adjust the assignment of the channels to the channel strips.

In the DC type, the "page switching" of channel assignment employed in the EC type is not provided. In a case where the number of channels extracted by the search in the EC type is more than 8, therefore, the channels of the EC type displayed on the channel display portion 223 at the time of the transfer to the DC type will be transferred to the channel display portion 223 of the DC type as the channels to be assigned. If the "page switching" is employed in the DC type as well, the search result performed in the EC type may be completely transferred to the DC type.

In a case where the user operates the EC type selection button 222 in a state where a user layer of DC type has been selected, the type of the layer immediately switches to EC type to immediately switch the display of the layer setting portion 220 to the display explained with reference to FIG. 7. In this case, however, the search criteria are reset to be a state where any criteria have not been set.

Furthermore, a library for storing settings of user layers may be provided to store library data sets each indicative of one or more search criteria set in FIG. 7 for a user layer of EC type, or of channels which are to be assigned to the channel strips (channel configuration) set in FIG. 8 for a user layer of DC type so that the user can select a desired set of library data from the library to recall the selected set of library data as a user library at desired timing. Furthermore, the user layer function may be designed such that the setting of a user layer of EC type or DC type can be copied to another user layer. Furthermore, the user layer function may also be designed such that in a case where a set of library data is recalled, assuming that the recalled user layer has been selected, the assignment of channels to the channel strips will be performed in accordance with the type indicated in the recalled library data.

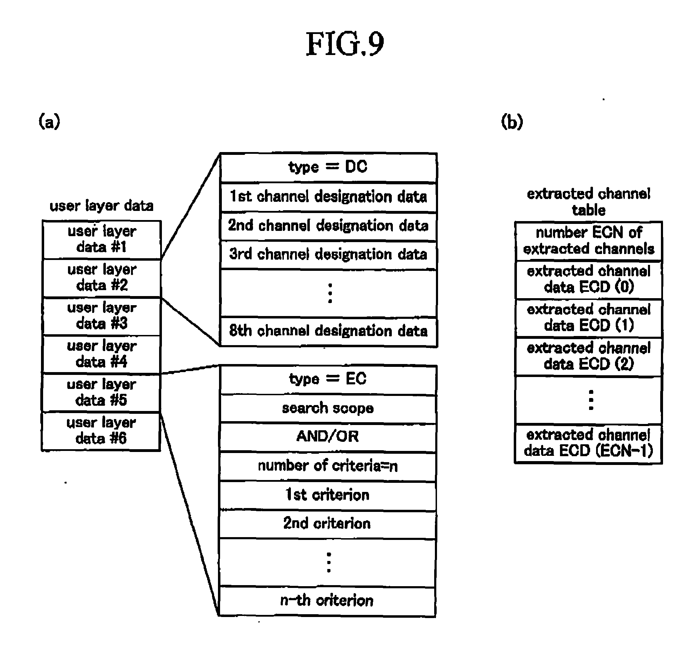

Next, FIG. 9 indicates data on the user layers which the digital mixer 10 has. The digital mixer 10 keeps user layer data indicated in FIG. 9(a) in the flash memory 12 as data for setting user layers. The digital mixer 10 also keeps an extracted channel table indicated in FIG. 9(b) in the RAM 13 as temporary data.

The user layer data includes 6 sets of user layer data corresponding to the 1st to 6th user layers, respectively. Each set of user layer data includes type data indicative of the type (DC or EC) set for the user layer, and has a data format specific to the set type.

In the case of a user layer of DC type, user layer data on the user layer includes first to eighth channel designation data sets which identify channels which are to be assigned to the 8 channel strips, respectively, and which also identify the apparatuses having the channels, respectively. The 8 channels identified by the first to eighth designation channel data sets are displayed on the assigned channel display portion 223 included in the user layer setting screen shown in FIG. 8, so that the user can change the assignment of the channels individually by use of the channel selection portion 250.

In the case of a user layer of EC type, user layer data on the user layer includes not the data which directly identifies the channels which are to be assigned, but various kinds of data which are to be used for a search for channels which are to be assigned. The various kinds of data includes search scope data indicative of the search scope set at the search scope selection portion 241, an AND/OR flag indicative of the selection of AND or OR set at the and/or selection portion 242, and first to n-th criterion data sets indicative of a plurality of search criterion set at the search criterion setting portion 230 on the user layer setting screen indicated in FIG. 7.

The extracted channel table is a table in which the search result obtained in accordance with the search criteria included in the user layer data of EC type is temporarily stored. An extracted channel number ECN indicates the number of channels extracted by the search. Extracted channel data sets ECD (0) to ECD (ECN-1) are data which identify the extracted channels the number of which is ECN, respectively. The assignment of channels to the channel strips of a layer of EC type is done on the basis of the data contained in the extracted channel table. Because a search will be performed at each switching of layer, the digital mixer 10 is provided with a single extracted channel table.

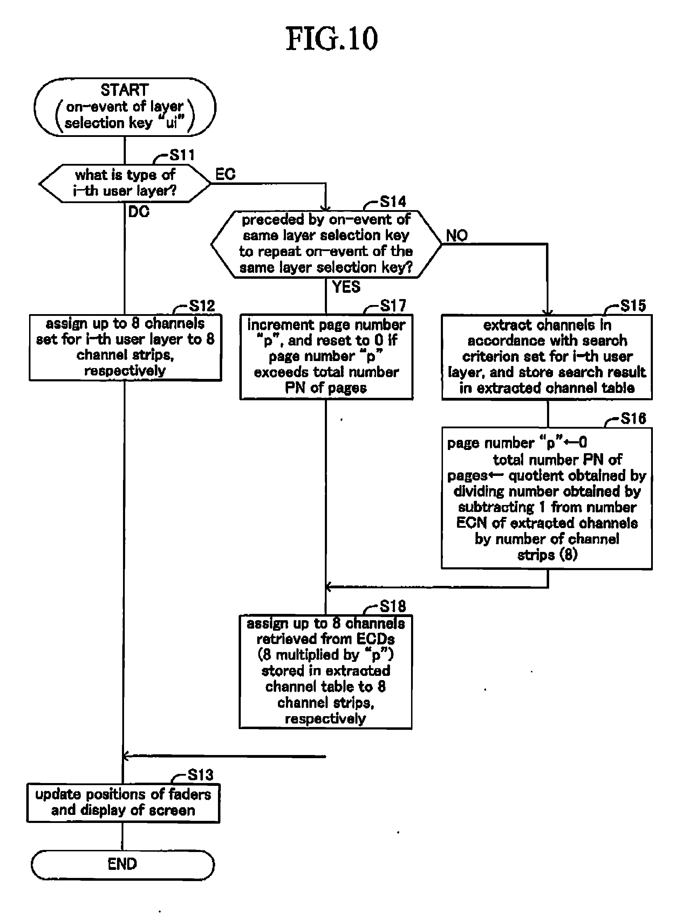

FIG. 10 indicates a flowchart of a process carried out by the CPU 11 of the digital mixer 10 when any layer selection key included in the user layer selection key group 160 has been depressed, that is, when the user has selected a user layer. In response to the detection of an on-event of a layer selection key "ui" corresponding to the i-th user layer made on the operating panel 100, the CPU 11 starts the process indicated in the flowchart of FIG. 10.

First, the CPU 11 refers to the type data included in the i-th user layer data ULi indicated in FIG. 9(a) to determine the type of the i-th user layer (S11). In a case where the i-th user layer is DC type, the CPU 11 refers to the first to eighth channel designation data sets included in the user layer data ULi, and assigns the channels (up to 8) identified by the data sets to the 8 channel strips 120, respectively (S12). The CPU 11 then changes respective positions of the knobs of the faders 124 and respective on/off states of the on-keys 123 of the channel strips 120 in accordance with respective values of parameters of the assigned channels, and displays the layer screen including the image of the channel strips 120 to which the up to 8 channels are assigned on the touchscreen 102. The process is then terminated (S13).

In a case where it is determined in step S11 that the i-th user layer is EC type, the CPU 11 judges whether the on-event is preceded by an on-event of the same layer selection key to repeat the on-event of the layer selection key (S14). If no, the CPU 11 refers to the search scope data, the and/or flag and the 1st to n-th criterion data sets included in the user layer data ULi to extract channels which are included in the channels of the digital mixer 10 (or the mixer system 1),are fallen within the search scope indicated by the search scope data, and agree with a criterion obtained by combining the n-number of criteria indicated by the 1st to n-th criterion data sets with AND or OR indicated by the and/or flag (satisfy the combined criteria) to store the extracted channel number ECN indicative of the number of extracted channels and the extracted channel data sets ECD(0) to ECD(ECN-1) indicative of the extracted channels in the extracted channel table shown in FIG. 9(b) (S15).

The CPU 11 then initializes a page number "p" to "0" which is the top page number, and also sets a last page number PN at a quotient obtained by dividing a number obtained by subtracting 1 from the extracted channel number ECN which is the number of channels extracted in step S15 by the number of channel strips (in this case, 8) of the channel strip portion 110 (S16). The step S16 indicates that the division by which the extracted ECN-number of channels are divided by the number of channel strips (8) results in a total of (PN+1) pages ranging from the 0th to PN-th pages.

From among the extracted channel data sets ECD(0) to ECD(ECN-1) stored in the extracted channel table, the CPU 11 then retrieves the extracted channel data sets belonging to the p-th page, that is, up to 8 data sets ranging from the extracted data ECD (8 multiplied by "p"), and assigns up to 8 channels indicated by the retrieved up to 8 data sets to the 8 channel strips 120, respectively (S18). By this assignment, the channel strips to which the channels extracted in step S15 are assigned are provided. The CPU 11 then adjusts respective positions of the knobs of the faders of the channel strips, and displays a layer screen including an image of the channel strips to which the up to 8 channels have been assigned (S13). Then, the process is terminated.

The above-described steps are performed in order to assign channels extracted on the basis of set extraction criteria to the channel strips 120 in a case where the detected on-event has been made by a layer selection key of EC type which is different from a layer selection key which had been operated for the immediately previous on-event.

In the determination of step S14, in a case where even though the same layer selection key has been operated in a row, a value of any parameter of any channel has been changed between the previous operation of the user layer selection key and the repeated operation of the user layer selection key, the process branches to "NO", for the change in the parameter value can cause changes in the search result. In step S14, however, only when the user layer selection key has been operated again without any change in parameter values of any channels after the user layer selection key had been operated (that is, in a case where any changes in search result will not be produced), the process branches to "YES".

In a case where "YES" is given to step S14, the CPU 11 increments the page number "p", and resets to "0" if the incremented page number "p" exceeds the last page number PN (S17). The CPU 11 then retrieves the extracted channel data sets (up to 8 data sets ranging from the extracted channel data ECD (8 multiplied by "p")) of the p-th page from the extracted channel table, and assigns up to 8 channels indicated by the retrieved up to 8 data sets to the 8 channel strips 120 (S18). The CPU 11 then adjusts respective positions of the knobs of the faders of the channel strips, and displays a layer screen including an image of the channel strips to which the up to 8 channels have been assigned (S13). Then, the process is terminated.

The above-described steps are performed in order to assign channels which are included in the extracted channels but could not be assigned at the previous assignment to the channel strips 120 in a case where the layer selection key has been operated in a row without re-extracting channels. In a case where the number of extracted channels is fewer than 8, which enables the assignment of all the extracted channels at a time (in a case where the total page number PN is 0), the page number "p" remains "0" even by the step S17. Therefore, the assignment of channels will not change.

In the above-described process, the CPU 11 serves as a channel extracting portion (channel extracting means) in step S15, and as a channel assigning portion (channel assigning means) in step S18.

Even in a case where the digital mixer 10 controls a multiplicity of channels, by performing the above-described process, the digital mixer 10 is able to assign desired channels which are included in the multiplicity of channels and satisfy criteria to the channel strips 120 in response to a user's touch of a key. Therefore, the digital mixer 10 is able to provide the user the channel strip portion provided with the channel strips having channels on which the user desires to edit parameters in response to user's simple operation. It is preferable that channels are assigned to the channel strips in a continued sequence so that there will be no vacant channel strip in between the occupied channel strips.

Furthermore, the user is able to set desired search criteria without concern for the number of channels which will satisfy the search criteria, for the channel strips are to be assigned a group of a certain number of channels in turn even in a case where the number of extracted channels is more than the number of channel strips.

Furthermore, channels extracted on the basis of extraction criteria on a user layer of EC type can be transferred to DC type as initial values of channel designation data sets of a user layer of DC type. Therefore, the channels which have been extracted at that point in time on the basis of the extraction criteria and have been assigned to the channel strips 120 can be fixed to the user layer of DC type as fixed assigned channels (which will not be changed even if any parameters of any channels are changed). In addition, user layers of DC type allow the user to change their channel designation data sets as the user wishes. Even in a case where the user cannot obtain his desired channels by a search, therefore, the user can modify the channels as the user desires.

Although the explanation about the embodiment has been completed above, it is obvious that the respective configurations of the apparatuses, concrete content of the processing, the content displayed on the screen, manners in which the apparatuses are operated, and the like are not limited to those explained in the explanation about the above-described embodiment.

In the above-described embodiment, for example, the page switching of a user layer of EC type is done by user's successive depressions of a layer selection key corresponding to the user layer. However, an operating portion for accepting user's operation for switching pages may be provided on the operating panel 100 or on an adequate GUI. In this case, even if the layer selection key has been depressed successively, the extraction of channels can be newly performed at each depression of successive depressions of the layer selection key.

Furthermore, the above-described embodiment may be modified such that search criteria for searching for channels in a user layer of EC type are associated with a plurality of switches, respectively, so that the user will operate desired switches to perform a search on the basis of combined search criteria corresponding to the operated switches. In an example of such a modification, criteria A to C are provided in correspondence with switches A to C, respectively, while the switches A to C are designed to be turned on/off by a toggle so that criteria corresponding to the switches which are in the on-state will be combined with "and" to perform a search. In a case where only the switch A is in the on-state, extraction of channels will be performed by use of the criterion A. in this state, if the switch B is turned on, extraction will be performed by combining the criterion A and the criterion B with "and" to narrow the extracted channels by use of the criterion B. By turning of the switch C to the on-state, similarly, the extracted channels can be further narrowed by use of the criterion C. Furthermore, the embodiment may be further modified to enable "OR" search instead of "AND" search.

Furthermore, the DAW application which will be carried out on a PC may be designed such that, similarly to the user layers of EC type, the user can set search criteria so that a channel search will be performed on the basis of the set search criteria in response to a user's instruction to extract channels to display the extracted channels on a mixer window displaying only the channel strips to which the extracted channels are assigned on a display of the PC (the setting of "Hide" is enabled on channel strips to which different channels are assigned).

For the search for channels in EC type, furthermore, similarly to the above-described case of the digital mixer 10. a user layer setting screen similar to the user layer setting screen of EC type indicated in FIG. 7 may be displayed on the display of the PC so that the user will perform a search by use of a pointing device (mouse or the like). In the DC type as well in which the user individually designates channels which will be assigned to the displayed channel strips, similarly to the case of the digital mixer 10, a user layer setting screen similar to the user layer setting screen of DC type indicated in FIG. 8 may be displayed on the display of the PC so that the user will designate channels which will be assigned to the channel strips individually by use of the pointing device (mouse or the like). In this case, however, because there is no restriction on the number of channel strips which can be displayed on a screen in DC type, the assigned channel display portion 223 may indicate all the strips of the extracted channels. Alternatively, a restriction on the number of channel strips which can be displayed on a screen may be imposed to provide the scroll buttons 224 and 225 on the screen. On the DAW application as well, therefore, for the channel selection in the EC type and the DC type, processing similar to that performed on the digital mixer except-that the number of selectable channels is not restricted will be performed. In a case where the type is switched from EC type to DC type, particularly, the DAW application will operate similarly to the case of the digital mixer in that all the channels selected in the EC type will be set on a user layer set at the EC type as an initial setting.

By operating an image of a desired operating element displayed on the screen with the pointing device (mouse or the like), the user is then able to change the value of a parameter assigned to the operating element of the channel assigned to the channel strip. In this case, it can be said that data representative of whether "Hide" is enabled or disabled on a channel strip is data defining whether the channel strip will be provided for the channel strip portion or not.

In addition, because the mixer window can be scrolled in a lateral direction, there is no restriction on the number of channel strips which are long in the vertical direction and are arranged in the lateral direction. Therefore, all the channels extracted on the basis of search criteria can be displayed on a single mixer window.

Furthermore, when the DAW application is used on the PC 2. there are cases in which a physical controller 4 (see FIG. 11) having a certain number of channel strips is connected as a dedicated user interface. Representative examples of such a physical controller are Houston (trademark) of Steinberg, and Mackie Control (trademark) of Mackie. In these cases, assignment of channels is done similarly to the case of the digital mixer 10. In these cases, more specifically, channels extracted by a search to display their channel strips on a mixer window will be divided into pages so that each page containing as many channels as the channel strips of the physical controller will be assigned to the channel strips.

In the case of such a configuration as well, user layer data and an extracted channel table (in this case, not the extracted channel table but an "extracted track table", for tracks will be extracted) may be similar to those indicated in FIG. 9. However, because the number of channel strips which will be displayed on a screen in the DC type is not restricted, necessary data is data on the number of tracks and as many track designation data sets as the tracks.

FIG. 12 indicates an example of a process executed by a CPU of the PC which carries out the DAW application in a case where "Hide" is to be set as described above. When the CPU detects an on-event of the i-th layer selection button for selecting the i-th user layer on a certain GUI, the CPU starts the process indicated in a flowchart of FIG. 12.

First, the CPU refers to user layer data to determine the type of the i-th user layer corresponding to the operated layer selection button (S21). In a case where the i-th user layer is DC type, the CPU refers to the user layer data, cancels "Hide" which is set on the channel strips of tracks set for the i-th user layer and indicates that the channel strips will not be displayed on a screen, and enables "Hide" on the channel strips of the other tracks (S22). The CPU then refreshes the screen in accordance with the changed settings (S23) to terminate the process.

In a case where it is determined in step S21 that the i-th user layer is EC type, the CPU refers to the user layer data, extracts tracks on the basis of search criteria set for the i-th user layer, and then stores the extracted result in the extracted track table (S24). The CPU then disables the setting of "Hide" on the channel strips of the tracks stored in the extracted track table, enables "Hide" on the channel strips of the other tracks (S25), refreshes the screen in accordance with the changed settings (S23), and then terminates the process.

In the above-described process, the CPU serves as a channel extracting portion (channel extracting means) in step S24, and as a channel strip creating portion (channel strip creating means) in steps S23 and S25. By step S25, more specifically, an image of the channel strips to which the tracks extracted in step S24 are assigned will be provided on the display.

Even in a case where a multiplicity of tracks need to be controlled, by the above-described process carried out by the PC which executes the DAW application, the user is able to display only the channel strips of desired tracks which are included in the multiplicity of tracks and satisfy criteria with user's one touch operation. Therefore, the user is able to readily prepare the tracks on which the user is to edit parameters by use of the channel strips displayed on the screen. By the above-described process, in other words, the user can be offered, with the user's simple operation, the channel strip portion having the channel strips of the tracks on which the user desires to edit parameters.

Furthermore, a similar channel strip portion may be provided without using the "Hide". For example, a screen on which objects indicative of channel strips of tracks of a user layer or objects of channel strips stored in the extracted track table are arranged side by side may be newly created. In this case, with objects of channel strips which have been displayed remaining, objects which will be arranged on a new screen may be additionally created. Alternatively, objects of some necessary channel strips included in the objects of channel strips which have been displayed on a screen may be moved to a new screen.

As for FIG. 5, furthermore, the case in which the DAW application is carried out by the PC 2 has been explained. However, a remote-control application for remote-controlling the digital mixers 10A and 10B may be carried out by the PC 2 instead of the DAW application. By use of functions of the remote-control application, in this case, the assignment of channels equivalent to the above-described user layer function will be applied to channel strips displayed on a screen in order to allow a user to edit parameter values for signal processing performed on the digital mixers 10A and 108.

Furthermore, the above-described embodiment is designed such that each of the user layers can be selectively set at either EC type or DC type. However, the embodiment may be modified such that user layers fixedly set at EC type and user layers fixedly set at DC type may be separately provided without allowing the switching of a user layer between the types.

In the above-described embodiment, furthermore, when the user layer setting screen of FIG. 7 is displayed on the screen, channels extracted on the basis of search criteria set on the screen are assigned to the 8 channel strips 120. However, the embodiment may be modified such that without performing the assignment of extracted channels to the channel strips on the user layer setting screen (only the setting of search criteria is done), the extracted channels are to be assigned to the channel strips in response to user's operation of the corresponding layer selection button 160.

In the above-described embodiment, furthermore, when the user changes the type of a user layer from EC type to DC type, the channels which have been searched on the basis of search criteria set for the user layer of EC type and assigned to the 8 channel strips are transferred to the channel assignment to the 8 channel strips for the user layer of DC type. However, the manner for transferring a user layer from EC type to DC type is not limited to the manner employed in the above-described embodiment. For example, the embodiment may be modified such that in response to a user's request for transfer made on the setting screen of a user layer of DC type from a different user layer of EC type to the user layer of DC type, channels searched on the basis of search criteria set for the different user layer will be assigned to the 8 channel strips for the user layer of DC type.

Furthermore, the above-described embodiment enables the user to select in the search criterion setting portion 230 whether search criteria should be combined with "AND" or "OR". However, the embodiment may be modified to be fixed to the "AND" search so that search criteria will be combined with "AND" at any time.

Furthermore, it is obvious that even if the present invention is applied to an apparatus other than digital mixer such as a synthesizer, recorder, effector and a tone generating apparatus, the present invention can be applied to any apparatuses as long as the applied apparatus is a sound signal processing apparatus which performs signal processing at a plurality of channels on the basis of parameter values stored in a parameter memory. In addition, it is also obvious that the present invention can be applied to an apparatus which is operated singly without being connected to any network.

Furthermore, the embodiment having the above-described configuration and modifications can be combined as desired within a scope in which any contradiction will not arise.

As apparent from the above description, the sound signal processing apparatus of the present invention facilitates settings of the user interface on which channel strips of desired channels are disposed.

Therefore, the present invention enhances operability of the sound signal processing apparatus.

## Claims

1. A sound signal processing apparatus comprising:
a plurality of channels each having a signal processing portion adapted for performing signal processing on an input sound signal;
a parameter memory adapted for storing parameters each of which indicates content of processing performed by the signal processing portion provided for each of the channels and is provided for each channel in a manner in which the parameters are correlated with the plurality of channels, respectively;
a search criterion setting portion adapted for setting a search criterion for searching for one or more channels of the plurality of channels;
channel extracting means adapted for extracting the one or more channels from the plurality of channels in accordance with the search criterion; and
a parameter setting portion adapted for setting the parameters of the extracted one or more channels.

2. The sound signal processing apparatus according to claim 1, wherein
the parameter setting portion is formed of:
a previously provided plurality of channel strips adapted for setting the parameters indicative of contents of signal processing performed by the respective signal processing portions provided for the plurality of channels; and
channel assigning means adapted for assigning the extracted one or more channels to the plurality of channel strips, respectively.

3. The sound signal processing apparatus according to claim 2, wherein
the plurality of channel strips are a physical input device or an image of channel strips displayed on a touchscreen.

4. The sound signal processing apparatus according to claim 2 or 3, wherein
the channel assigning means assigns the extracted one or more channels to the plurality of channel strips in sequence.

5. The sound signal processing apparatus according to claim 4, wherein
the channel assigning means has re-assigning means adapted for assigning, in response to an instruction for re-assigning channels, in sequence to the plurality of channel strips, in a case where the number of extracted channels is larger than the number of channel strips, one or more channels which are included in the extracted channels but have not been assigned to the channel strips yet.

6. The sound signal processing apparatus according to any of claims 2 to 5, the apparatus further comprising:
a channel configuration data memory adapted for storing, in response to user's operation for storage, channel configuration data indicative of a configuration of one or more channels assigned to the channel strips by the channel assigning means; wherein
in response to user's operation for reading the channel configuration data, parameters of the one or more channels indicated by the channel configuration data are set on the plurality of channel strips.

7. The sound signal processing apparatus according to claim 6, the apparatus further comprising:
a channel modifying portion adapted for modifying the channel configuration indicated by the configuration data stored in the channel configuration data memory.

8. The sound signal processing apparatus according to claim 6 or 7, wherein
the channel configuration data memory stores selectable sets of channel configuration data.

9. The sound signal processing apparatus according to claim 1, wherein
the parameter setting portion has channel strip creating means adapted for displaying, on a display, one or more channel strips which correspond to the extracted one or more channels, respectively, and are provided for setting parameters indicative of contents of signal processing performed by the signal processing portions provided for the plurality of channels, respectively: and
the parameter setting portion sets the parameters of the extracted one or more channels in accordance with user's operation on the displayed one or more channel strips made by use of a pointing device.

10. The sound signal processing apparatus according to claim 9, wherein
the channel strip creating means controls whether or not each of the one or more channel strips corresponding to the extracted one or more channels is to be displayed on the display, by enabling or disabling data which is provided for each of the plurality of channel strips and indicates whether the corresponding channel strip is to be displayed on the display.

11. The sound signal processing apparatus according to claim 9 or 10, the apparatus further comprising:
a channel configuration data memory adapted for storing, in response to user's operation for storage, channel configuration data indicative of a configuration of one or more channels corresponding to the one or more channel strips created by the channel strip creating means; wherein
in response to user's operation for reading the channel configuration data stored in the channel configuration data memory, the one or more channel strips corresponding to the one or more channels indicated by the channel configuration data are displayed on the display.

12. The sound signal processing apparatus according to claim 11, the apparatus further comprising:
a channel modifying portion adapted for modifying the channel configuration indicated by the configuration data stored in the channel configuration data memory.

13. The sound signal processing apparatus according to claim 11 or 12, wherein
the channel configuration data memory stores selectable sets of channel configuration data.

14. The sound signal processing apparatus according to any of claims 11 to 13, wherein
the channel configuration data is data indicative of whether or not the channel strips are to be displayed on the display.

15. The sound signal processing apparatus according to any of claims 1 to 14, wherein
the search criterion setting portion sets type and content of the parameter as the search criterion; and
the channel extracting means extracts the one or more channels having a parameter agreeing with the type and content of the parameter set as the search criterion.

16. The sound signal processing apparatus according to any of claims 1 to 15, wherein
the parameter memory also stores channel identification information which is previously provided for each channel in order to identify the channel but is irrelevant to signal processing performed by the signal processing portion of the channel as a parameter in a manner in which the channel is correlated with the channel identification information;
the search criterion setting portion sets the channel identification information as the search criterion; and
the channel extracting means extracts the one or more channels having a parameter which agrees with the channel identification information set as the search criterion.

17. The sound signal processing apparatus according to any of claims 1 to 16, wherein
the search criterion setting portion has a criterion memory adapted for storing a search criterion set by the search criterion setting portion; and
the channel extracting means extracts the one or more channels in accordance with the search criterion stored in the criterion memory.

18. The sound signal processing apparatus according to claim 17, wherein
the criterion memory stores selectable combinations of criteria.
